# EUROPEAN PATENT SPECIFICATION

(11) **EP 3 823 425 B1**
(45) Date of publication and mention of the grant of the patent: **28.02.2024**
(21) Application number: 20201408.0
(22) Date of filing: 04.12.2014
(51) Int. Cl.: G06F 21/33, G06F 21/44, G06F 21/60, G06F 21/62, H04L 9/32, H04L 9/40

(54) **OPERATOR ACTION AUTHENTICATION IN AN INDUSTRIAL CONTROL SYSTEM**
BEDIENERMASSNAHMENAUTHENTIFIZIERUNG IN EINEM INDUSTRIELLEN STEUERSYSTEM
AUTHENTIFICATION D'ACTION D'OPÉRATEUR DANS UN SYSTÈME DE COMMANDE INDUSTRIEL

(30) Priority: 07.07.2014 US 201462021438 P; 30.07.2014 US 201414446412; 27.08.2014 US 201414469931; 20.10.2014 US 201414519066
(43) Date of publication of application: 19.05.2021
(62) Divisional of application: 14196409.8
(73) Proprietor: Bedrock Automation Platforms Inc., San Jose, CA 95134 (US)
(72) Inventor: ROOYAKKERS, Albert, Sunnyvale, CA 94087 (US); CALVIN, James G., Attleboro, MA 02703 (US); CLISH, Timothy, Taunton, MA 02780 (US); GALPIN, Samuel, Westford, MA 01886 (US)
(74) Representative: Hamer, Christopher K.

(56) References cited:
- US-A1- 2005 144 437
- US-A1- 2005 229 004
- US-A1- 2014 068 712

## Description

### CROSS-REFERENCE TO RELATED APPLICATIONS

The present application is a continuation-in-part of International Application No. PCT/US2013/053721, filed August 6, 2013, and titled, "SECURE INDUSTRIAL CONTROL SYSTEM." The present application is also a continuation-in-part under 35 U.S.C. §120 of U.S. Patent Application Serial No. 14/469,931, filed August 27, 2014, and titled "SECURE INDUSTRIAL CONTROL SYSTEM." The present application is also a continuation-in-part under 35 U.S.C. §120 of U.S. Patent Application Serial No. 14/446,412, filed July 30, 2014, and titled "INDUSTRIAL CONTROL SYSTEM CABLE," which claims priority under 35 U.S.C. §119(e) of U.S. Provisional Application Serial No. 62/021,438, filed July 7, 2014, and titled "INDUSTRIAL CONTROL SYSTEM CABLE."

### BACKGROUND

Industrial control systems, such as standard industrial control systems (ICS) or programmable automation controllers (PAC), include various types of control equipment used in industrial production, such as supervisory control and data acquisition (SCADA) systems, distributed control systems (DCS), programmable logic controllers (PLC), and industrial safety systems certified to safety standards such as IEC1508. These systems are used in industries including electrical, water and wastewater, oil and gas production and refining, chemical, food, pharmaceuticals and robotics. Using information collected from various types of sensors to measure process variables, automated and/or operator-driven supervisory commands from the industrial control system can be transmitted to various actuator devices such as control valves, hydraulic actuators, magnetic actuators, electrical switches, motors, solenoids, and the like. These actuator devices collect data from sensors and sensor systems, open and close valves and breakers, regulate valves and motors, monitor the industrial process for alarm conditions, and so forth.

In other examples, SCADA systems can use open-loop control with process sites that may be widely separated geographically. These systems use Remote Terminal Units (RTUs) to send supervisory data to one or more control centers. SCADA applications that deploy RTU's include fluid pipelines, electrical distribution and large communication systems. DCS systems are generally used for real-time data collection and continuous control with high-bandwidth, low-latency data networks and are used in large campus industrial process plants, such as oil and gas, refining, chemical, pharmaceutical, food and beverage, water and wastewater, pulp and paper, utility power, and mining and metals. PLCs more typically provide Boolean and sequential logic operations, and timers, as well as continuous control and are often used in stand-alone machinery and robotics. Further, ICE and PAC systems can be used in facility processes for buildings, airports, ships, space stations, and the like (e.g., to monitor and control Heating, Ventilation, and Air Conditioning (HVAC) equipment and energy consumption). As industrial control systems evolve, new technologies are combining aspects of these various types of control systems. For instance, PACs can include aspects of SCADA, DCS, and PLCs. Patent document US2014/068712 forms part of the background art

### SUMMARY

According to various embodiments of this disclosure, a secure industrial control system includes one or more communications/control modules that control or drive one or more industrial elements (e.g., input/output (I/O) modules, power modules, field devices, switches, workstations, and/or physical interconnect devices). Operator actions and/or other commands or requests can be secured via an authentication path from an action originator to a communications/control module. In implementations, the industrial control system requires an action authenticator to sign an action request generated by the action originator. The destination communications/control module is configured to receive the signed action request, verify the authenticity of the signed action request, and perform a requested action when the authenticity of the signed action request is verified. In this manner, malicious or otherwise unauthorized action requests are not processed, and thus the system is protected from malware, spyware, unauthorized changes of control parameters, unauthorized access to data, and so forth.

In some embodiments, the communications/control module includes at least one processor and a non-transitory medium bearing a set of instructions executable by the processor. The set of instructions includes at least instructions to: receive an action request initiated by an action originator and signed by an action authenticator; verify the authenticity of the signed action request; and perform a requested action when the authenticity of the signed action request is verified.

Further, a method of authenticating a requested action is disclosed. The method includes: signing an action request with an action authenticator; sending the signed action request to a communications/control module; verifying the authenticity of the signed action request; and performing a requested action with the communications/control module when the authenticity of the signed action request is verified.

This Summary is provided to introduce a selection of concepts in a simplified form that are further described below in the Detailed Description. (This Summary is not intended to identify key features or essential features of the claimed subject matter, nor is it intended to be used as an aid in determining the scope of the claimed subject matter.)

### DRAWINGS

The Detailed Description is described with reference to the accompanying figures. The use of the same reference numbers in different instances in the description and the figures may indicate similar or identical items.
FIG. 1 is a block diagram illustrating an industrial control system in accordance with example embodiments of the present disclosure.
FIG. 2 is a block diagram illustrating an action authentication path for the industrial control system in accordance with example embodiments of the present disclosure.
FIG. 3 is a block diagram further illustrating the action authentication path in accordance with example embodiments of the present disclosure.
FIG. 4 is a flow diagram illustrating a method of authenticating an action request in accordance with example embodiments of the present disclosure.
FIG. 5 is a flow diagram further illustrating the method of authenticating the action request in accordance with example embodiments of the present disclosure.

### DETAILED DESCRIPTION

### Overview

In industrial control systems, various industrial elements/subsystems (e.g., input/output (I/O) modules, power modules, process sensors and/or actuators, switches, workstations, and/or physical interconnect devices) are controlled or driven by control elements/subsystems (e.g., one or more communications/control modules). The control elements/subsystems operate according to programming and action requests (e.g., executable software modules, control commands, data requests, and the like) received from an action originator such as, but not limited to: an operator interface (e.g., SCADA or human machine interface (HMI)), an engineering interface, a local application, and/or a remote application. Where multiple action originators are present, the industrial control system can be vulnerable to unauthorized access to data and/or controls. Further, the industrial control system can be vulnerable to malware, spyware, or other corrupt/malicious software that can be transmitted in the form of an update, application image, control command, or the like. Simply authenticating the operator may not be enough to secure the system from malicious actors or even unintentionally unauthorized requests/commands that can be originated via a valid login or a seemingly valid (e.g., hacked) application or operator/engineering interface.

The present disclosure is directed to industrial control system communications/control modules, subsystems and techniques for preventing unauthorized action requests from being processed in an industrial control system. In embodiments, a predefined selection of operations or all operator actions and/or other control actions or requests are secured via an authentication path from an action originator to a communications/control module. In implementations, the industrial control system requires an action authenticator to sign an action request generated by the action originator. Unsigned action requests may automatically result in an error and will not be processed or executed by the communications/control module. The communications/control module is configured to receive the signed action request, verify the authenticity of the signed action request, and perform a requested action when the authenticity of the signed action request is verified. In this manner, malicious or otherwise unauthorized action requests are not processed, and thus the system is protected from malware, spyware, unauthorized changes of control parameters, unauthorized access to data, and so forth.

### Example Implementations

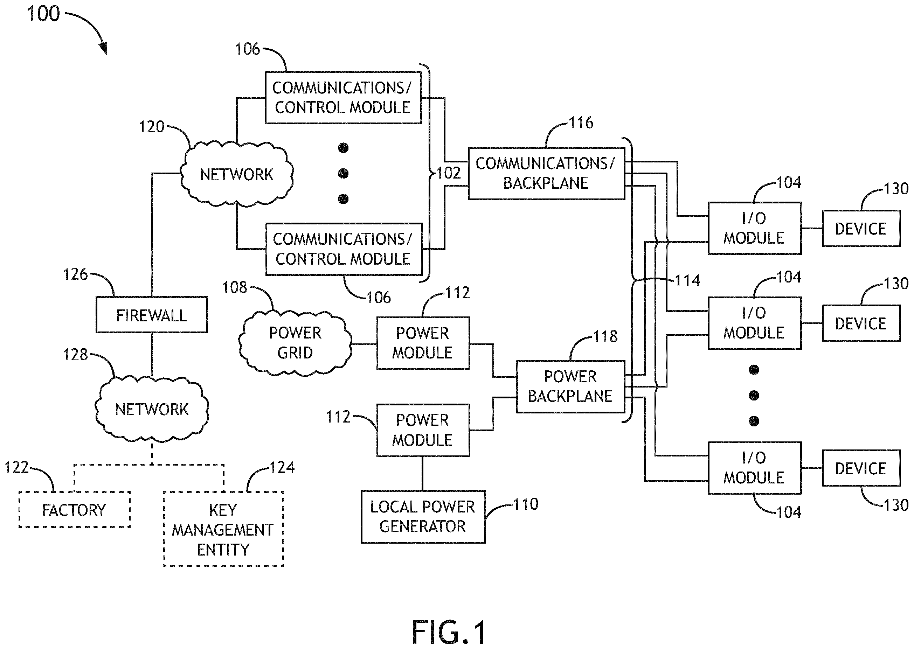

FIG. 1 illustrates an industrial control system 100 in accordance with an example embodiment of the present disclosure. In embodiments, the industrial control system 100 may comprise an industrial control system (ICS), a programmable automation controller (PAC), a supervisory control and data acquisition (SCADA) system, a distributed control system (DCS), programmable logic controller (PLC), and industrial safety system certified to safety standards such as IEC1508, or the like. As shown in FIG. 1, the industrial control system 100 uses a communications control architecture to implement a distributed control system that includes one or more industrial elements (e.g., input/output modules, power modules, field devices, switches, workstations, and/or physical interconnect devices) that are controlled or driven by one or more control elements or subsystems 102 distributed throughout the system. For example, one or more I/O modules 104 may be connected to one or more communications/control modules 106 making up the control element/subsystem 102. The industrial control system 100 is configured to transmit data to and from the I/O modules 104. The I/O modules 104 can comprise input modules, output modules, and/or input and output modules. For instance, input modules can be used to receive information from input devices 130 (e.g., sensors) in the process, while output modules can be used to transmit instructions to output devices (e.g., actuators). For example, an I/O module 104 can be connected to a process sensor for measuring pressure in piping for a gas plant, a refinery, and so forth and/or connected to a process actuator for controlling a valve, binary or multiple state switch, transmitter, or the like. Field devices 130 are communicatively coupled with the IO modules 104 either directly or via network connections. These devices 130 can include control valves, hydraulic actuators, magnetic actuators, motors, solenoids, electrical switches, transmitters, input sensors/receivers (e.g., illumination, radiation, gas, temperature, electrical, magnetic, and/or acoustic sensors) communications sub-busses, and the like.

In implementations, the I/O modules 104 can be used the industrial control system 100 collect data in applications including, but not necessarily limited to critical infrastructure and/or industrial processes, such as product manufacturing and fabrication, utility power generation, oil, gas, and chemical refining; pharmaceuticals, food and beverage, pulp and paper, metals and mining and facility and large campus industrial processes for buildings, airports, ships, and space stations (e.g., to monitor and control Heating, Ventilation, and Air Conditioning (HVAC) equipment and energy consumption).

In implementations, an I/O module 104 can be configured to convert analog data received from the sensor to digital data (e.g., using Analog-to-Digital Converter (ADC) circuitry, and so forth). An I/O module 104 can also be connected to one or more process actuators such as a motor or a regulating valve or an electrical relay and other forms of actuators and configured to control one or more operating characteristics of the motor, such as motor speed, motor torque, or position of the regulating valve or state of the electrical relay and so forth. Further, the I/O module 104 can be configured to convert digital data to analog data for transmission to the actuator (e.g., using Digital-to-Analog (DAC) circuitry, and so forth). In implementations, one or more of the I/O modules 104 can comprise a communications module configured for communicating via a communications sub-bus, such as an Ethernet bus, an H1 field bus, a Process Field Bus (PROFIBUS), a Highway Addressable Remote Transducer (HART) bus, a Modbus, and so forth. Further, two or more I/O modules 104 can be used to provide fault tolerant and redundant connections for various field devices 130 such as control valves, hydraulic actuators, magnetic actuators, motors, solenoids, electrical switches, transmitters, input sensors/receivers (e.g., illumination, radiation, gas, temperature, electrical, magnetic, and/or acoustic sensors) communications sub-busses, and the like.

Each I/O module 104 can be provided with a unique identifier (ID) for distinguishing one I/O module 104 from another I/O module 104. In implementations, an I/O module 104 is identified by its ID when it is connected to the industrial control system 100. Multiple I/O modules 104 can be used with the industrial control 100 to provide redundancy. For example, two or more I/O modules 104 can be connected to a process sensor and/or actuator. Each I/O module 104 can include one or more ports that furnish a physical connection to hardware and circuitry included with the I/O module 104, such as a printed circuit board (PCB), and so forth. For example, each I/O module 104 includes a connection for a cable that connects the cable to a printed wiring board (PWB) in the I/O module 104.

One or more of the I/O modules 104 can include an interface for connecting to other networks including, but not necessarily limited to: a wide-area cellular telephone network, such as a 3G cellular network, a 4G cellular network, or a Global System for Mobile communications (GSM) network; a wireless computer communications network, such as a Wi-Fi network (e.g., a Wireless LAN (WLAN) operated using IEEE 802.11 network standards); a Personal Area Network (PAN) (e.g., a Wireless PAN (WPAN) operated using IEEE 802.15 network standards); a Wide Area Network (WAN); an intranet; an extranet; an internet; the Internet; and so on. Further, one or more of the I/O modules 104 can include a connection for connecting an I/O module 104 to a computer bus, and so forth.

The communications/control modules 106 can be used to monitor and control the I/O modules 104, and to connect two or more I/O modules 104 together. In embodiments of the disclosure, a communications/control module 106 can update a routing table when an I/O module 104 is connected to the industrial control system 100 based upon a unique ID for the I/O module 104. Further, when multiple redundant I/O modules 104 are used, each communications/control module 106 can implement mirroring of informational databases regarding the I/O modules 104 and update them as data is received from and/or transmitted to the I/O modules 104. In some embodiments, two or more communications/control module 106 are used to provide redundancy. For added security, the communications/control module 106 can be configured to perform an authentication sequence or handshake to authenticate one another at predefined events or times including such as startup, reset, installation of a new control module 106, replacement of a communications/control module 106, periodically, scheduled times, and the like.

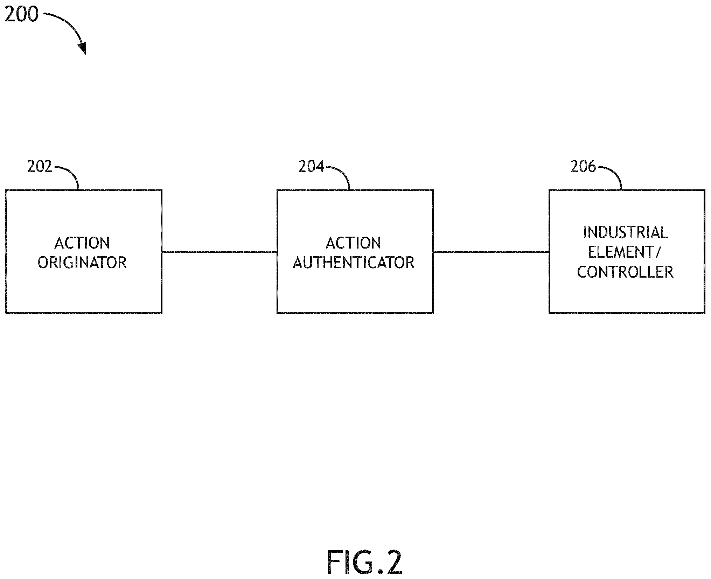

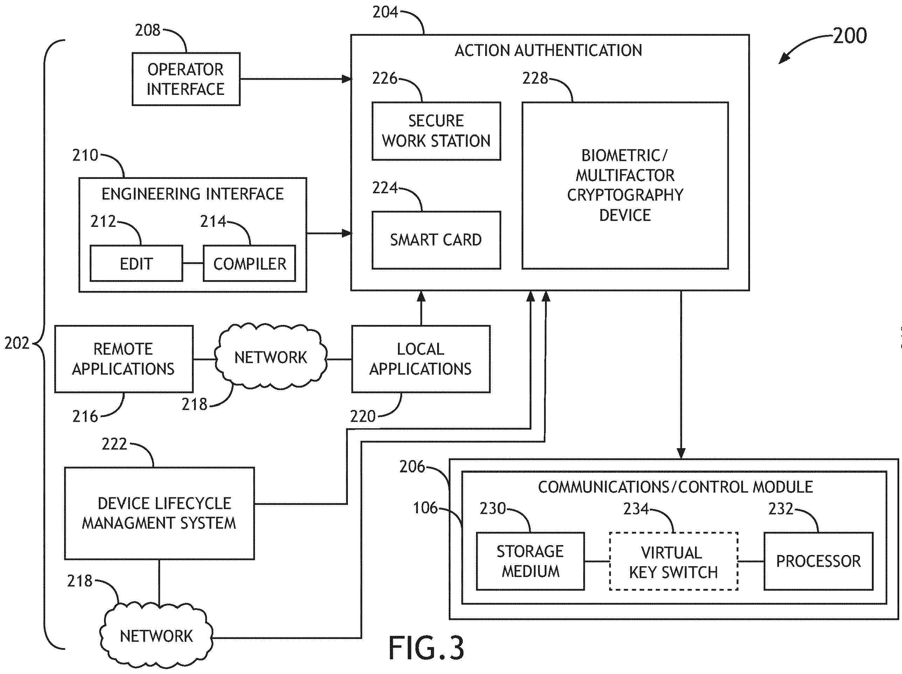

As shown in FIGS. 2 and 3, each communications/control module 106 or any other industrial element/controller 206 (e.g., I/O module 104, field device 130 such as an actuator or sensor, physical interconnect device, switch, power module 112, or the like) can be at least partially operated according to requests/commands from an action originator 202. In implementations, the action originator 202 includes an operator interface 208 (e.g., SCADA or HMI), an engineering interface 210 including an editor 212 and a compiler 214, a local application 220, a remote application 216 (e.g., communicating through a network 218 via a local application 220), or the like. In the authentication path 200 illustrated in FIGS. 2 and 3, the industrial element/controller 206 (e.g., communications/control module 106, I/O module 104, field device 130 such as an actuator or sensor, physical interconnect device, switch, power module 112, or the like) processes an action request (e.g., request for data, control command, firmware/software update, set point control, application image download, or the like) only when the action request has been signed and/or encrypted by an action authenticator 204. This prevents unauthorized action requests from valid user profiles and further secures the system from unauthorized action requests coming from invalid (e.g., hacked) profiles.

The action authenticator 204 can either be on-site with the action originator 202 (e.g., directly connected device lifecycle management system ("DLM") 222 or secured workstation 226) or remotely located (e.g., DLM 222 connected via the network 218). In general, the action authenticator 204 includes a storage medium with a private key stored thereon and a processor configured to sign and/or encrypt the action request generated by the action originator 202 with the private key. The private key is stored in a memory that cannot be accessed via standard operator login. For instance, the secured workstation 226 can require a physical key, portable encryption device (e.g., smart card, RFID tag, or the like), and/or biometric input for access.

In some embodiments, the action authenticator 204 includes a portable encryption device such as a smart card 224 (which can include a secured microprocessor). The advantage of using a portable encryption device is that the entire device (including the privately stored key and processor in communication therewith) can be carried with an operator or user that has authorized access to an interface of the action originator 202. Whether the action authentication node 204 accesses the authentication path 200 via secured or unsecured workstation, the action request from the action originator 202 can be securely signed and/or encrypted within the architecture of the portable encryption device instead of a potentially less secure workstation or cloud-based architecture. This secures the industrial control system 100 from unauthorized actions. For instance, an unauthorized person would have to physically take possession of the smart card 224 before being able to authenticate any action requests sent via the action originator 202.

Furthermore, multiple layers of security can be employed. For example, the action authenticator 204 can include a secured workstation 226 that is only accessible to sign and/or encrypt action requests via smart card access or the like. Additionally, the secured workstation 226 can be accessible via a biometric or multifactor cryptography device 228 (e.g., fingerprint scanner, iris scanner, and/or facial recognition device). In some embodiments, a multifactor cryptography device 228 requires a valid biometric input before enabling the smart card 224 or other portable encryption device to sign the action request.

The communications/control module 106 or any other industrial element/controller 206 being driven by the action originator 202 is configured to receive the signed action request, verify the authenticity of the signed action request, and perform a requested action when the authenticity of the signed action request is verified. In some embodiments, the industrial element/controller 206 includes a storage medium 230 (e.g., SD/micro-SD card, HDD, SSD, or any other non-transitory storage device) configured to store the action request (e.g., application image, control command, and/or any other data sent by the action originator). The communications/control module 106 or any other industrial element/controller 206 further includes a processor 232 that performs/executes the action request (i.e., performs the requested action) after the signature is verified. In some embodiments, the action request is encrypted by the action originator 202 and/or the action authenticator 232 and must also be decrypted by the processor 232 before the requested action can be performed. In implementations, the communications/control module 106 or any other industrial element/controller 206 includes a virtual key switch 234 (e.g., a software module running on the processor 232) that enables the processor 232 to perform the requested action only after the action request signature is verified and/or after the action request is decrypted. In some embodiments, each and every action or each one of a selection of critical actions must clear the authentication path before being run on the communications/control module 106 or any other industrial element/controller 206.

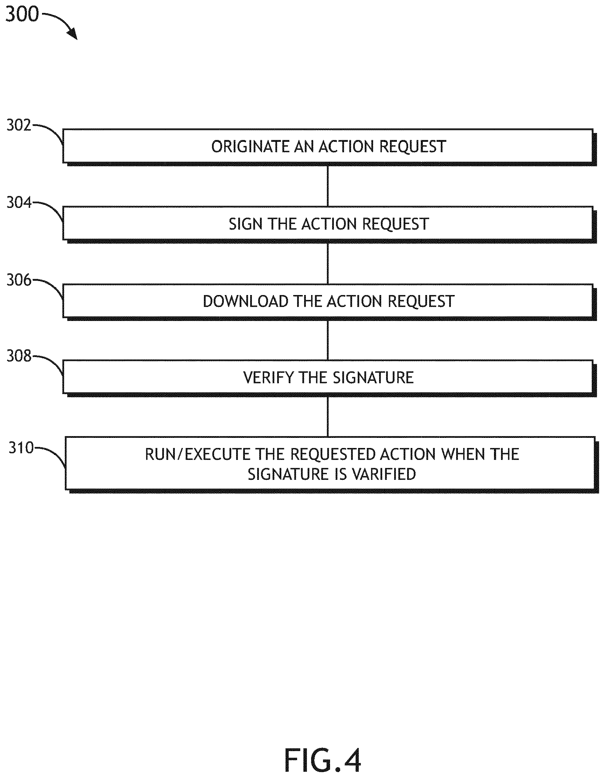

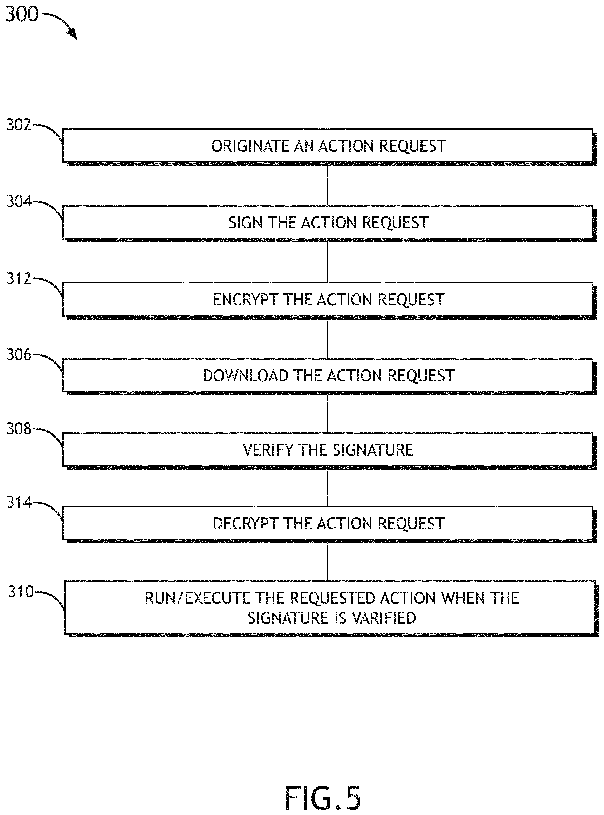

FIGS. 4 and 5 illustrate a method 300 of authenticating an action request in accordance with exemplary embodiments of this disclosure. In implementations, the method 300 can be manifested by the industrial control system 100 and/or authentication path 200 of the industrial control system 100. The method 300 includes: (302) originating an action request (e.g., via an operator/engineering interface 208/210 or a remote/local application interface 216/220); (304) signing the action request with the action authenticator 204; (312) optionally encrypting the action request with the action authenticator 204; (306) sending or downloading the signed action request to a communications/control module 106 or any other industrial element/controller 206; (308) verifying the authenticity of the signed action request; (314) optionally decrypting the action request with the communications/control module 106 or any other industrial element/controller 206; and (310) performing a requested action with the communications/control module 106 or any other industrial element/controller 206 when the authenticity of the signed action request is verified.

For enhanced security, the communications/control module 106 or any other industrial element/controller 206 can be further configured to perform an authentication sequence with the action authenticator 204 (e.g., with a smart card 224 or the like) before the requested action is run by the communications/control module 106 or any other industrial element/controller 206. For example, the so-called "handshake" can be performed prior to step 310 or even prior to step 306. In some embodiments, the signature and verification steps 304 and 308 can be completely replaced with a more intricate authentication sequence. Alternatively, the authentication sequence can be performed as an additional security measure to augment the simpler signature verification and/or decryption measures.

In some embodiments, the authentication sequence implemented by the communications/control module 106 or any other industrial element/controller 206 can include: sending a request datagram to the action authenticator 204, the request datagram including a first nonce, a first device authentication key certificate (e.g., a first authentication certificate that contains a device authentication key), and a first identity attribute certificate; receiving a response datagram from the action authenticator 204, the response datagram including a second nonce, a first signature associated with the first and second nonces, a second device authentication key certificate (e.g., a second authentication certificate that contains a device authentication key), and a second identity attribute certificate; validating the response datagram by verifying the first signature associated with the first and second nonces, the second device authentication key certificate, and the second identity attribute certificate; and sending an authentication datagram to the action authenticator 204 when the response datagram is valid, the authentication datagram including a second signature associated with the first and second nonces.

Alternatively, the action authenticator 204 can initiate the handshake, in which case the authentication sequence implemented by the communications/control module 106 or any other industrial element/controller 206 can include: receiving a request datagram from the action authenticator 204, the request datagram including a first nonce, a first device authentication key certificate, and a first identity attribute certificate; validating the request datagram by verifying the first device authentication key certificate and the first identity attribute certificate; sending a response datagram to the action authenticator 204 when the request datagram is valid, the response datagram including a second nonce, a first signature associated with the first and second nonces, a second device authentication key certificate, and a second identity attribute certificate; receiving an authentication datagram from the action authenticator 204, the authentication datagram including a second signature associated with the first and second nonces; and validating the authentication datagram by verifying the second signature associated with the first and second nonces.

The handshake or authentication sequence that can be implemented by the communications/control module 106 or any other industrial element/controller 206 and the action authenticator 204 is further described in co-pending U.S. Non-provisional Application Serial No. [Not Yet Assigned], titled "INDUSTRIAL CONTROL SYSTEM REDUNDANT COMMUNIATIONS/CONTROL MODULES AUTHENTICATION," By Timothy Clish et al., filed October 20, 2014. Those skilled in the art will appreciate the applicability of the handshake between redundant communications/control modules 106 to the handshake described herein between the communications/control module 106 or any other industrial element/controller 206 and the action authenticator 204.

Each of the action originator 202, the action authenticator 204, and communications/control module 106 or any other industrial element/controller 206 can include circuitry and/or logic enabled to perform the functions or operations (e.g., blocks of method 300 and the authentication sequence) described herein. For example, each of the action originator 202, the action authenticator 204, and the communications/control module 106 or any other industrial element/controller 206 can include one or more processors that execute program instruction stored permanently, semi-permanently, or temporarily by a non-transitory machine readable medium such as, but not limited to: a hard disk drive (HDD), solid-state disk (SDD), optical disk, magnetic storage device, flash drive, or SD/micro-SD card.

Referring again to FIG. 1, data transmitted by the industrial control system 100 can be packetized, i.e., discrete portions of the data can be converted into data packets comprising the data portions along with network control information, and so forth. The industrial control system 100 can use one or more protocols for data transmission, including a bit-oriented synchronous data link layer protocol such as High-Level Data Link Control (HDLC). In some embodiments, the industrial control system 100 implements HDLC according to an International Organization for Standardization (ISO) 13239 standard, or the like. Further, two or more communications/control modules 106 can be used to implement redundant HDLC. However, it should be noted that HDLC is provided by way of example only and is not meant to be restrictive of the present disclosure. Thus, the industrial control system 100 can use other various communications protocols in accordance with the present disclosure.

One or more of the communications/control module 106 can be configured for exchanging information with components used for monitoring and/or controlling the field devices 130 (e.g., sensor and/or actuator instrumentation) connected to the industrial control system 100 via the I/O modules 104, such as one or more control loop feedback mechanisms/controllers. In implementations, a controller can be configured as a microcontroller/Programmable Logic Controller (PLC), a Proportional-Integral-Derivative (PID) controller, and so forth. In some embodiments, the I/O modules 104 and the communications/control modules 106 include network interfaces, e.g., for connecting one or more I/O modules 104 to one or more controllers via a network. In implementations, a network interface can be configured as a Gigabit Ethernet interface for connecting the I/O modules 104 to a Local Area Network (LAN). Further, two or more communications/control modules 106 can be used to implement redundant Gigabit Ethernet. However, it should be noted that Gigabit Ethernet is provided by way of example only and is not meant to be restrictive of the present disclosure. Thus, a network interface can be configured for connecting the communications/control modules 106 to other various networks including, but not necessarily limited to: a wide-area cellular telephone network, such as a 3G cellular network, a 4G cellular network, or a GSM network; a wireless computer communications network, such as a Wi-Fi network (e.g., a WLAN operated using IEEE 802.11 network standards); a PAN (e.g., a WPAN operated using IEEE 802.15 network standards); a WAN; an intranet; an extranet; an internet; the Internet; and so on. Additionally, a network interface can be implemented using a computer bus. For example, a network interface can include a Peripheral Component Interconnect (PCI) card interface, such as a Mini PCI interface, and so forth. Further, the network can be configured to include a single network or multiple networks across different access points.

The industrial control system 100 can receive electrical power from multiple sources. For example, AC power is supplied from a power grid 108 (e.g., using high voltage power from AC mains). AC power can also be supplied using local power generation (e.g., an on-site turbine or diesel local power generator 110). A power supply 112 is used to distribute electrical power from the power grid 108 to automation equipment of the industrial control system 100, such as controllers, I/O modules, and so forth. A power supply 112 can also be used to distribute electrical power from the local power generator 110 to the industrial control system equipment. The industrial control system 100 can also include additional (backup) power supplies configured to store and return DC power using multiple battery modules. For example, a power supply 112 functions as a UPS. In embodiments of the disclosure, multiple power supplies 112 can be distributed (e.g., physically decentralized) within the industrial control system 100.

In some embodiments, the control elements/subsystems and/or industrial elements (e.g., the I/O modules 104, the communications/control modules 106, the power supplies 112, and so forth) are connected together by one or more backplanes 114. For example, communications/control modules 106 can be connected to I/O modules 104 by a communications backplane 116. Further, power supplies 112 can be connected to I/O modules 104 and/or to communications/control modules 106 by a power backplane 118. In some embodiments, physical interconnect devices (e.g., switches, connectors, or cables such as, but not limited to, those described in U.S. Non-provisional Application Serial No. 14/446,412) are used to connect to the I/O modules 104, the communications/control modules 106, the power supplies 112, and possibly other industrial control system equipment. For example, a cable can be used to connect a communications/control module 106 to a network 120, another cable can be used to connect a power supply 112 to a power grid 108, another cable can be used to connect a power supply 112 to a local power generator 110, and so forth.

In some embodiments, the industrial control system 100 implements a secure control system. For example, the industrial control system 100 includes a security credential source (e.g., a factory 122) and a security credential implementer (e.g., a key management entity 124). The security credential source is configured to generate a unique security credential (e.g., a key, a certificate, etc., such as a unique identifier, and/or a security credential). The security credential implementer is configured to provision the control elements/subsystems and/or industrial elements (e.g., cables, devices 130, I/O modules 104, communications/control modules 106, power supplies 112, and so forth) with a unique security credential generated by the security credential source.

Multiple (e.g., every) device 130, I/O module 104, communications/control module 106, power supply 112, physical interconnect devices, etc., of the industrial control system 100 can be provisioned with security credentials for providing security at multiple (e.g., all) levels of the industrial control system 100. Still further, the control elements/subsystems and/or industrial elements including the sensors and/or actuators and so forth, can be provisioned with the unique security credentials (e.g., keys, certificates, etc.) during manufacture (e.g., at birth), and can be managed from birth by a key management entity 124 of the industrial control system 100 for promoting security of the industrial control system 100.

In some embodiments, communications between the control elements/subsystems and/or industrial elements including the sensors and/or actuators and so forth, of the industrial control system 100 includes an authentication process. The authentication process can be performed for authenticating control elements/subsystem and/or industrial elements including the sensors and/or actuators and so forth, implemented in the industrial control system 100. Further, the authentication process can utilize security credentials associated with the element and/or physical interconnect device for authenticating that element and/or physical interconnect device. For example, the security credentials can include encryption keys, certificates (e.g., public key certificates, digital certificates, identity certificates, security certificates, asymmetric certificates, standard certificates, non-standard certificates) and/or identification numbers.

In implementations, multiple control elements/subsystems and/or industrial elements of the industrial control system 100 are provisioned with their own unique security credentials. For example, each element of the industrial control system 100 may be provisioned with its own unique set(s) of certificates, encryption keys and/or identification numbers when the element is manufactured (e.g., the individual sets of keys and certificates are defined at the birth of the element). The sets of certificates, encryption keys and/or identification numbers are configured for providing/supporting strong encryption. The encryption keys can be implemented with standard (e.g., commercial off-the-shelf (COTS)) encryption algorithms, such as National Security Agency (NSA) algorithms, National Institute of Standards and Technology (NIST) algorithms, or the like.

Based upon the results of the authentication process, the element being authenticated can be activated, partial functionality of the element can be enabled or disabled within the industrial control system 100, complete functionality of the element can be enabled within the industrial control system 100, and/or functionality of the element within the industrial control system 100 can be completely disabled (e.g., no communication facilitated between that element and other elements of the industrial control system 100).

In embodiments, the keys, certificates and/or identification numbers associated with an element of the industrial control system 100 can specify the original equipment manufacturer (OEM) of that element. As used herein, the term "original equipment manufacturer" or "OEM" can be defined as an entity that physically manufactures the device (e.g., element) and/or a supplier of the device such as an entity that purchases the device from a physical manufacturer and sells the device. Thus, in embodiments, a device can be manufactured and distributed (sold) by an OEM that is both the physical manufacturer and the supplier of the device. However, in other embodiments, a device can be distributed by an OEM that is a supplier, but is not the physical manufacturer. In such embodiments, the OEM can cause the device to be manufactured by a physical manufacturer (e.g., the OEM can purchase, contract, order, etc. the device from the physical manufacturer).

Additionally, where the OEM comprises a supplier that is not the physical manufacturer of the device, the device can bear the brand of the supplier instead of brand of the physical manufacturer. For example, in embodiments where an element (e.g., a communications/control module 106) is associated with a particular OEM that is a supplier but not the physical manufacturer, the element's keys, certificates and/or identification numbers can specify that origin. During authentication of an element of the industrial control system 100, when a determination is made that an element being authenticated was manufactured or supplied by an entity that is different than the OEM of one or more other elements of the industrial control system 100, then the functionality of that element can be at least partially disabled within the industrial control system 100. For example, limitations can be placed upon communication (e.g., data transfer) between that element and other elements of the industrial control system 100, such that the element cannot work/function within the industrial control system 100. When one of the elements of the industrial control system 100 requires replacement, this feature can prevent a user of the industrial control system 100 from unknowingly replacing the element with a non-homogenous element (e.g., an element having a different origin (a different OEM) than the remaining elements of the industrial control system 100) and implementing the element in the industrial control system 100. In this manner, the techniques described herein can prevent the substitution of elements of other OEM's into a secure industrial control system 100. In one example, the substitution of elements that furnish similar functionality in place of elements provided by an originating OEM can be prevented, since the substituted elements cannot authenticate and operate within the originating OEM's system. In another example, a first reseller can be provided with elements having a first set of physical and cryptographic labels by an originating OEM, and the first reseller's elements can be installed in an industrial control system 100. In this example, a second reseller can be provided with elements having a second (e.g., different) set of physical and cryptographic labels by the same originating OEM. In this example, the second reseller's elements may be prevented from operating within the industrial control system 100, since they may not authenticate and operate with the first reseller's elements. However, it should also be noted that the first reseller and the second reseller may enter into a mutual agreement, where the first and second elements can be configured to authenticate and operate within the same industrial control system 100. Further, in some embodiments, an agreement between resellers to allow interoperation can also be implemented so the agreement only applies to a specific customer, group of customers, facility, etc.

In another instance, a user can attempt to implement an incorrectly designated (e.g., mismarked) element within the industrial control system 100. For example, the mismarked element can have a physical indicia marked upon it which falsely indicates that the element is associated with the same OEM as the OEM of the other elements of the industrial control system 100. In such instances, the authentication process implemented by the industrial control system 100 can cause the user to be alerted that the element is counterfeit. This process can also promote improved security for the industrial control system 100, since counterfeit elements are often a vehicle by which malicious software can be introduced into the industrial control system 100. In embodiments, the authentication process provides a secure air gap for the industrial control system 100, ensuring that the secure industrial control system is physically isolated from insecure networks.

In implementations, the secure industrial control system 100 includes a key management entity 124. The key management entity 124 can be configured for managing cryptographic keys (e.g., encryption keys) in a cryptosystem. This managing of cryptographic keys (e.g., key management) can include the generation, exchange, storage, use, and/or replacement of the keys. For example, the key management entity 124 is configured to serve as a security credentials source, generating unique security credentials (e.g., public security credentials, secret security credentials) for the elements of the industrial control system 100. Key management pertains to keys at the user and/or system level (e.g., either between users or systems).

In embodiments, the key management entity 124 comprises a secure entity such as an entity located in a secure facility. The key management entity 124 can be remotely located from the I/O modules 104, the communications/control modules 106, and the network 120. For example, a firewall 126 can separate the key management entity 124 from the control elements or subsystems 102 and the network 120 (e.g., a corporate network). In implementations, the firewall 126 can be a software and/or hardware-based network security system that controls ingoing and outgoing network traffic by analyzing data packets and determining whether the data packets should be allowed through or not, based on a rule set. The firewall 126 thus establishes a barrier between a trusted, secure internal network (e.g., the network 120) and another network 128 that is not assumed to be secure and trusted (e.g., a cloud and/or the Internet). In embodiments, the firewall 126 allows for selective (e.g., secure) communication between the key management entity 124 and one or more of the control elements or subsystems 102 and/or the network 120. In examples, one or more firewalls can be implemented at various locations within the industrial control system 100. For example, firewalls can be integrated into switches and/or workstations of the network 120.

The secure industrial control system 100 can further include one or more manufacturing entities (e.g., factories 122). The manufacturing entities can be associated with original equipment manufacturers (OEMs) for the elements of the industrial control system 100. The key management entity 124 can be communicatively coupled with the manufacturing entity via a network (e.g., a cloud). In implementations, when the elements of the industrial control system 100 are being manufactured at one or more manufacturing entities, the key management entity 124 can be communicatively coupled with (e.g., can have an encrypted communications pipeline to) the elements. The key management entity 124 can utilize the communications pipeline for provisioning the elements with security credentials (e.g., inserting keys, certificates and/or identification numbers into the elements) at the point of manufacture.

Further, when the elements are placed into use (e.g., activated), the key management entity 124 can be communicatively coupled (e.g., via an encrypted communications pipeline) to each individual element worldwide and can confirm and sign the use of specific code, revoke (e.g., remove) the use of any particular code, and/or enable the use of any particular code. Thus, the key management entity 124 can communicate with each element at the factory where the element is originally manufactured (e.g., born), such that the element is born with managed keys. A master database and/or table including all encryption keys, certificates and/or identification numbers for each element of the industrial control system 100 can be maintained by the key management entity 124. The key management entity 124, through its communication with the elements, is configured for revoking keys, thereby promoting the ability of the authentication mechanism to counter theft and re-use of components.

In implementations, the key management entity 124 can be communicatively coupled with one or more of the control elements/subsystems, industrial elements, and/or the network 120 via another network (e.g., a cloud and/or the Internet) and firewall. For example, in embodiments, the key management entity 124 can be a centralized system or a distributed system. Moreover, in embodiments, the key management entity 124 can be managed locally or remotely. In some implementations, the key management entity 124 can be located within (e.g., integrated into) the network 120 and/or the control elements or subsystems 102. The key management entity 124 can provide management and/or can be managed in a variety of ways. For example, the key management entity 124 can be implemented/managed: by a customer at a central location, by the customer at individual factory locations, by an external third party management company and/or by the customer at different layers of the industrial control system 100, and at different locations, depending on the layer.

Varying levels of security (e.g., scalable, user-configured amounts of security) can be provided by the authentication process. For example, a base level of security can be provided which authenticates the elements and protects code within the elements. Other layers of security can be added as well. For example, security can be implemented to such a degree that a component, such as the communications/control module 106, cannot power up without proper authentication occurring. In implementations, encryption in the code is implemented in the elements, while security credentials (e.g., keys and certificates) are implemented on the elements. Security can be distributed (e.g., flows) through the industrial control system 100. For example, security can flow through the industrial control system 100 all the way to an end user, who knows what a module is designed to control in that instance. In embodiments, the authentication process provides encryption, identification of devices for secure communication and authentication of system hardware or software components (e.g., via digital signature).

In implementations, the authentication process can be implemented to provide for and/or enable interoperability within the secure industrial control system 100 of elements manufactured and/or supplied by different manufacturers/vendors/suppliers (e.g., OEMs). For example, selective (e.g., some) interoperability between elements manufactured and/or supplied by different manufacturers/vendors/suppliers can be enabled. In embodiments, unique security credentials (e.g., keys) implemented during authentication can form a hierarchy, thereby allowing for different functions to be performed by different elements of the industrial control system 100.

The communication links connecting the components of the industrial control system 100 can further employ data packets, such as runt packets (e.g., packets smaller than sixty-four (64) bytes), placed (e.g., injected and/or stuffed) therein, providing an added level of security. The use of runt packets increases the level of difficulty with which outside information (e.g., malicious content such as false messages, malware (viruses), data mining applications, etc.) can be injected onto the communications links. For example, runt packets can be injected onto a communication link within gaps between data packets transmitted between the action originator 204 and the communications/control module 106 or any other industrial element/controller 206 to hinder an external entity's ability to inject malicious content onto the communication link.

Generally, any of the functions described herein can be implemented using hardware (e.g., fixed logic circuitry such as integrated circuits), software, firmware, manual processing, or a combination thereof. Thus, the blocks discussed in the above disclosure generally represent hardware (e.g., fixed logic circuitry such as integrated circuits), software, firmware, or a combination thereof. In the instance of a hardware configuration, the various blocks discussed in the above disclosure may be implemented as integrated circuits along with other functionality. Such integrated circuits may include all of the functions of a given block, system, or circuit, or a portion of the functions of the block, system, or circuit. Further, elements of the blocks, systems, or circuits may be implemented across multiple integrated circuits. Such integrated circuits may comprise various integrated circuits, including, but not necessarily limited to: a monolithic integrated circuit, a flip chip integrated circuit, a multichip module integrated circuit, and/or a mixed signal integrated circuit. In the instance of a software implementation, the various blocks discussed in the above disclosure represent executable instructions (e.g., program code) that perform specified tasks when executed on a processor. These executable instructions can be stored in one or more tangible computer readable media. In some such instances, the entire system, block, or circuit may be implemented using its software or firmware equivalent. In other instances, one part of a given system, block, or circuit may be implemented in software or firmware, while other parts are implemented in hardware.

Although the subject matter has been described in language specific to structural features and/or process operations, it is to be understood that the subject matter defined in the appended claims is not necessarily limited to the specific features or acts described above. Rather, the specific features and acts described above are disclosed as example forms of implementing the claims.

## Claims

1. A secure industrial control system (100), comprising:
an action originator (202) and a communications/control module (106) configured to be at least partially operated according to action requests from the action originator (202);
an action authenticator (204) remotely located from the action originator (202) and including a storage medium with a private key stored thereon and a processor configured to sign an action request from the action originator (202) with the private key and send the signed action request to the communications/control module (106); and
wherein the communications/control module (106) is in communication with one or more industrial elements, the one or more industrial elements (206) including at least one input/output module (104) operable to receive sensor information or send control information to an actuator, the communications/control module (106) including at least one processor (232) and a non-transitory medium (230) bearing a set of instructions executable by the at least one processor (232), the set of instructions including instructions to:
receive the signed action request from the action authenticator (204) and verify the authenticity of the signed action request, wherein verifying the authenticity of the signed action request further comprises:
receiving a request datagram from the action authenticator (204), the request datagram including a first nonce, a first device authentication key certificate, and a first identity attribute certificate;
validating the request datagram by verifying the first device authentication key certificate and the first identity attribute certificate;
sending a response datagram to the action authenticator (204) when the request datagram is valid, the response datagram including a second nonce, a first signature associated with the first and second nonces, a second device authentication key certificate, and a second identity attribute certificate;
receiving an authentication datagram from the action authenticator (204), the authentication datagram including a second signature associated with the first and second nonces; and
validating the authentication datagram by verifying the second signature associated with the first and second nonces; and
perform the requested action when the authenticity of the signed action request is verified, wherein the action request includes one or more operator control actions from the action originator (202) for monitoring and/or controlling sensor and/or actuator instrumentation.

2. The industrial control system of claim 1, wherein the action originator (202) comprises at least one of: an operator interface (208); an engineering interface (210); a local application interface (220); or a remote application interface (216).

3. The secure industrial control system of claim 1 or claim 2, wherein the action authenticator (204) comprises a portable encryption device, preferably comprising a smart card, that includes the at least one processor, preferably an encrypted microprocessor, in communication with the storage medium having the private key stored thereon.

4. The secure industrial control system of any of claims 1 to 3, wherein the action authenticator (204) comprises a secured workstation (226); preferably wherein the secured workstation (226) is accessible via at least one of: a physical key; a portable encryption device; or a biometric cryptography device.

5. The secure industrial control system of any of claims 1 to 4, wherein the action authenticator (204) is further configured to encrypt the action request prior to sending the signed action request to the communication/control module (106).

6. The secure industrial control system of any of claims 1 to 5, wherein the communications/control module (106) incudes:
a virtual key switch (234) that enables the processor (232) to run the action request when the authenticity of the signed action request is verified.

7. The secure industrial control system of any of claims 1 to 6, wherein the communications/control module (106) and the action authenticator (204) are further configured to perform an authentication sequence.

8. The secure industrial control system of any one of claims 1 to 7, wherein the one or more industrial elements (206) further include at least one of: a communications/control module (106); a power module (112); a field device (130); a switch; a workstation; or a physical interconnect device.

9. A communications/control module (106) configured to be at least partially operated according to action requests from an action originator (202), comprising:
at least one processor (232); and
a non-transitory medium (230) bearing a set of instructions executable by the at least one processor (232), the set of instructions including instructions to:
receive an action request initiated at an action originator (202) and signed by an action authenticator (204);
verify the authenticity of the signed action request;
wherein verifying the authenticity of the signed action request further comprises:
receiving a request datagram from the action authenticator (204), the request datagram including a first nonce, a first device authentication key certificate, and a first identity attribute certificate;
validating the request datagram by verifying the first device authentication key certificate and the first identity attribute certificate;
sending a response datagram to the action authenticator (204) when the request datagram is valid, the response datagram including a second nonce, a first signature associated with the first and second nonces, a second device authentication key certificate, and a second identity attribute certificate;
receiving an authentication datagram from the action authenticator (204), the authentication datagram including a second signature associated with the first and second nonces; and
validating the authentication datagram by verifying the second signature associated with the first and second nonces; and
perform the requested action when the authenticity of the signed action request is verified, wherein the action request includes one or more operator control actions from the action originator (202), and wherein the action originator (202) includes at least one of: an operator interface (208), an engineering interface (210), a local application interface (220), and a remote application interface (216).

10. The communications/control module of claim 9, further comprising:
a virtual key switch (234) that enables the processor (232) to run the action request when the authenticity of the signed action request is verified.

11. The communications/control module of claim 9 or claim 10, wherein the set of instructions further includes instructions to decrypt the signed action request; and/or wherein the instructions to perform the requested action when the authenticity of the signed action request is verified include:
instructions to control a communicatively coupled industrial element (206) including at least one of: a communications/control module (106); an input/output module (104); a power module (112); a field device (130); a switch; a workstation; or a physical interconnect device.

12. A method of executing a requested action in a secure industrial control system (100), comprising:
signing an action request from an action originator (202) with an action authenticator (204), the action authenticator (204) remotely located from the action originator (202) and including a storage medium with a private key stored thereon and a processor configured to sign an action request from the action originator with the private key;
receiving the signed action request at a communications/control module (106) configured to be at least partially operated according to action requests from the action originator (202), the communications/control module in communication with one or more industrial elements (206), the one or more industrial elements (206) including at least one input/output module (104) operable to receive sensor information or send control information to an actuator, the communications/control module (206) including at least one processor (232) and a non-transitory medium (230) bearing a set of instructions executable by the at least one processor (232) for controlling communications with the one or more industrial elements (206);
verifying the authenticity of the signed action request, wherein verifying the authenticity of the signed action request further comprises
receiving a request datagram from the action authenticator (204), the request datagram including a first nonce, a first device authentication key certificate, and a first identity attribute certificate;
validating the request datagram by verifying the first device authentication key certificate and the first identity attribute certificate;
sending a response datagram to the action authenticator (204) when the request datagram is valid, the response datagram including a second nonce, a first signature associated with the first and second nonces, a second device authentication key certificate, and a second identity attribute certificate;
receiving an authentication datagram from the action authenticator (204), the authentication datagram including a second signature associated with the first and second nonces; and
validating the authentication datagram by verifying the second signature associated with the first and second nonces; and
executing the requested action via the communications/control module (106) only when the authenticity of the signed action request is verified, wherein the action request includes commands from the action originator (202) for monitoring and/or controlling sensor and/or actuator instrumentation; the method preferably further comprising:
encrypting the action request with the action authenticator; and
decrypting the action request with the communications/control module.

13. The method of claim 12, wherein the action authenticator (204) comprises at least one of: a portable encryption device, preferably as defined in claim 3; a secured workstation (226), preferably as defined in claim 4; or a device lifecycle management system (222).

14. The method of claim 12 or claim 13, wherein executing the requested action further includes:
controlling an industrial element (206) according to the action request, the industrial element (206) including at least one of: a communications/control module (106); an input/output module (104); a power module (112); a field device (130); a switch; a workstation; or a physical interconnect device.

15. The secure industrial control system of any of claims 1 to 8 or the method of any of claims 12 to 14, wherein the communications/control module (106) and the at least one input/output module (104) are configured to receive respective first and second unique security credentials at respective points of manufacture from a key management entity (124), the first and second unique security credentials being stored in respective memories of the communications/control module (106) and the at least one input/output module (104), wherein at least one of the first and second unique security credentials is revokable by the key management entity (124) remotely via communicative coupling with the communications/control module (106) or the at least one input/output module (104).

## Patentansprüche

1. Ein sicheres industrielles Steuerungssystem (100), umfassend:
einen Maßnahmenurheber (202) und ein Kommunikations-/Steuerungsmodul (106), dafür konfiguriert, mindestens teilweise gemäß Maßnahmenanforderungen von dem Maßnahmenurheber (202) betrieben zu werden;
einen Maßnahmenauthentifikator (204), der von dem Maßnahmenurheber (202) entfernt angeordnet ist und ein Speichermedium mit einem darauf gespeicherten privaten Schlüssel und einen Prozessor beinhaltet, dafür konfiguriert, eine Maßnahmenanforderung von dem Maßnahmenurheber (202) mit dem privaten Schlüssel zu signieren und die signierte Maßnahmenanforderung an das Kommunikations-/Steuerungsmodul (106) zu senden; und
wobei das Kommunikations-/Steuerungsmodul (106) in Kommunikation mit einem oder mehreren industriellen Elementen steht, wobei das eine oder die mehreren industriellen Elemente (206) mindestens ein Eingabe-/Ausgabemodul (104) beinhalten, das betriebsfähig ist, um Sensorinformationen zu empfangen oder Steuerungsinformationen an einen Aktuator zu senden, wobei das Kommunikations-/Steuerungsmodul (106) mindestens einen Prozessor (232) und ein nicht transitorisches Medium (230), das einen durch den mindestens einen Prozessor (232) ausführbaren Satz Anweisungen enthält, beinhaltet, wobei der Satz Anweisungen Anweisungen für Folgendes beinhaltet:
Empfangen der signierten Maßnahmenanforderung von dem Maßnahmenauthentifikator (204) und Verifizieren der Authentizität der signierten Maßnahmenanforderung, wobei das Verifizieren der Authentizität der signierten Maßnahmenanforderung ferner Folgendes umfasst:
Empfangen eines Anforderungsdatagramms von dem Maßnahmenauthentifikator (204), wobei das Anforderungsdatagramm eine erste Nonce, ein erstes Vorrichtungsauthentifizierungsschlüsselzertifikat und ein erstes Identitätsattributzertifikat beinhaltet;
Validieren des Anforderungsdatagramms durch Verifizieren des ersten Vorrichtungsauthentifizierungsschlüsselzertifikats und des ersten Identitätsattributzertifikats;
Senden eines Antwortdatagramms an den Maßnahmenauthentifikator (204), wenn das Anforderungsdatagramm gültig ist, wobei das Antwortdatagramm eine zweite Nonce, eine mit der ersten und zweiten Nonce assoziierte erste Signatur, ein zweites Vorrichtungsauthentifizierungsschlüsselzertifikat und ein zweites Identitätsattributzertifikat beinhaltet;
Empfangen eines Authentifizierungsdatagramms von dem Maßnahmenauthentifikator (204), wobei das Authentifizierungsdatagramm eine mit der ersten und zweiten Nonce assoziierte zweite Signatur beinhaltet; und
Validieren des Authentifizierungsdatagramms durch Verifizieren der mit der ersten und zweiten Nonce assoziierten zweiten Signatur; und
Durchführen der angeforderten Maßnahme, wenn die Authentizität der signierten Maßnahmenanforderung verifiziert ist, wobei die Maßnahmenanforderung eine oder mehrere Bedienersteuerungsmaßnahmen von dem Maßnahmenurheber (202) zum Überwachen und/oder Steuern von Sensor- und/oder Aktuatorgeräten beinhaltet.

2. Das industrielle Steuerungssystem nach Anspruch 1, wobei der Maßnahmenurheber (202) mindestens eines von Folgendem beinhaltet: eine Bedienerschnittstelle (208); eine Engineeringschnittstelle (210); eine lokale Anwendungsschnittstelle (220); oder eine entfernte Anwendungsschnittstelle (216).

3. Das sichere industrielle Steuerungssystem nach Anspruch 1 oder Anspruch 2, wobei der Maßnahmenauthentifikator (204) eine tragbare Verschlüsselungsvorrichtung, bevorzugt umfassend eine Smartcard, die den mindestens einen Prozessor, bevorzugt einen verschlüsselten Mikroprozessor, beinhaltet, in Kommunikation mit dem Speichermedium, das den darauf gespeicherten privaten Schlüssel aufweist, umfasst.

4. Das sichere industrielle Steuerungssystem nach einem der Ansprüche 1 bis 3, wobei der Maßnahmenauthentifikator (204) eine gesicherte Arbeitsstation (226) umfasst; wobei bevorzugt die gesicherte Arbeitsstation (226) über mindestens eines von Folgendem zugreifbar ist: einen physischen Schlüssel; eine tragbare Verschlüsselungsvorrichtung; oder eine biometrische Kryptografievorrichtung.

5. Das sichere industrielle Steuerungssystem nach einem der Ansprüche 1 bis 4, wobei der Maßnahmenauthentifikator (204) dafür konfiguriert ist, die Maßnahmenanforderung vor dem Senden der signierten Maßnahmenanforderung an das Kommunikations-/Steuerungsmodul (106) zu verschlüsseln.

6. Das sichere industrielle Steuerungssystem nach einem der Ansprüche 1 bis 5, wobei das Kommunikations-/Steuerungsmodul (106) Folgendes beinhaltet:
einen virtuellen Schlüsselschalter (234), der den Prozessor (232) freigibt, um die Maßnahmenanforderung auszuführen, wenn die Authentizität der signierten Maßnahmenanforderung verifiziert ist.

7. Das sichere industrielle Steuerungssystem nach einem der Ansprüche 1 bis 6, wobei das Kommunikations-/Steuerungsmodul (106) und der Maßnahmenauthentifikator (204) ferner dafür konfiguriert sind, eine Authentifizierungssequenz durchzuführen.

8. Das sichere industrielle Steuerungssystem nach einem der Ansprüche 1 bis 7, wobei das eine oder die mehreren industriellen Elemente (206) ferner mindestens eines von Folgendem beinhalten: ein Kommunikations-/Steuerungsmodul (106); ein Strommodul (112); eine Feldvorrichtung (130); einen Schalter; eine Arbeitsstation; oder eine physische Zwischenverbindungsvorrichtung.

9. Ein Kommunikations-/Steuerungsmodul (106), dafür konfiguriert, mindestens teilweise gemäß Maßnahmenanforderungen von dem Maßnahmenurheber (202) betrieben zu werden, umfassend:
mindestens einen Prozessor (232); und
ein nicht transitorisches Medium (230), das einen durch den mindestens einen Prozessor (232) ausführbaren Satz Anweisungen enthält, wobei der Satz Anweisungen Anweisungen für Folgendes beinhaltet:
Empfangen einer an einem Maßnahmenurheber (202) initiierten und durch einen Maßnahmenauthentifikator (204) signierten Maßnahmenanforderung;
Verifizieren der Authentizität der signierten Maßnahmenanforderung;
wobei das Verifizieren der Authentizität der signierten Maßnahmenanforderung ferner Folgendes umfasst:
Empfangen eines Anforderungsdatagramms von dem Maßnahmenauthentifikator (204), wobei das Anforderungsdatagramm eine erste Nonce, ein erstes Vorrichtungsauthentifizierungsschlüsselzertifikat und ein erstes Identitätsattributzertifikat beinhaltet;
Validieren des Anforderungsdatagramms durch Verifizieren des ersten Vorrichtungsauthentifizierungsschlüsselzertifikats und des ersten Identitätsattributzertifikats;
Senden eines Antwortdatagramms an den Maßnahmenauthentifikator (204), wenn das Anforderungsdatagramm gültig ist, wobei das Antwortdatagramm eine zweite Nonce, eine mit der ersten und zweiten Nonce assoziierte erste Signatur, ein zweites Vorrichtungsauthentifizierungsschlüsselzertifikat und ein zweites Identitätsattributzertifikat beinhaltet;
Empfangen eines Authentifizierungsdatagramms von dem Maßnahmenauthentifikator (204), wobei das Authentifizierungsdatagramm eine mit der ersten und zweiten Nonce assoziierte zweite Signatur beinhaltet; und
Validieren des Authentifizierungsdatagramms durch Verifizieren der mit der ersten und zweiten Nonce assoziierten zweiten Signatur; und
Durchführen der angeforderten Maßnahme, wenn die Authentizität der signierten Maßnahmenanforderung verifiziert ist, wobei die Maßnahmenanforderung eine oder mehrere Bedienersteuerungsmaßnahmen von dem Maßnahmenurheber (202) beinhaltet, und wobei der Maßnahmenurheber (202) mindestens eines von Folgendem beinhaltet: eine Bedienerschnittstelle (208), eine Engineeringschnittstelle (210), eine lokale Anwendungsschnittstelle (220), und eine entfernte Anwendungsschnittstelle (216).

10. Das Kommunikations-/Steuerungsmodul nach Anspruch 9, das ferner Folgendes umfasst:
einen virtuellen Schlüsselschalter (234), der den Prozessor (232) freigibt, um die Maßnahmenanforderung auszuführen, wenn die Authentizität der signierten Maßnahmenanforderung verifiziert ist.

11. Das Kommunikations-/Steuerungsmodul nach Anspruch 9 oder Anspruch 10, wobei der Satz Anweisungen ferner Anweisungen beinhaltet, um die signierte Maßnahmenanforderung zu verschlüsseln; und/oder wobei die Anweisungen, um die angeforderte Maßnahme durchzuführen, wenn die Authentizität der signierten Maßnahmenanforderung verifiziert ist, Folgendes beinhalten:
Anweisungen zum Steuern eines kommunikativ gekoppelten industriellen Elements (206), das mindestens eines von Folgendem beinhaltet: ein Kommunikations-/Steuerungsmodul (106); ein Eingabe-/Ausgabemodul (104); ein Strommodul (112); eine Feldvorrichtung (130); einen Schalter; eine Arbeitsstation; oder eine physische Zwischenverbindungsvorrichtung.

12. Ein Verfahren zum Ausführen einer angeforderten Maßnahme in einem sicheren industriellen Steuerungssystem (100), umfassend:
Signieren einer Maßnahmenanforderung von einem Maßnahmenurheber (202) mit einem Maßnahmenauthentifikator (204), wobei der Maßnahmenauthentifikator (204) von dem Maßnahmenurheber (202) entfernt angeordnet ist und ein Speichermedium mit einem darauf gespeicherten privaten Schlüssel und einen Prozessor beinhaltet, dafür konfiguriert, eine Maßnahmenanforderung von dem Maßnahmenurheber mit dem privaten Schlüssel zu signieren;
Empfangen der signierten Maßnahmenanforderung an einem Kommunikations-/Steuerungsmodul (106), dafür konfiguriert, mindestens teilweise gemäß Maßnahmenanforderungen von dem Maßnahmenurheber (202) betrieben zu werden, wobei das Kommunikations-/Steuerungsmodul in Kommunikation mit einem oder mehreren industriellen Elementen (206) steht, wobei das eine oder die mehreren industriellen Elemente (206) mindestens ein Eingabe-/Ausgabemodul (104) beinhalten, das betriebsfähig ist, um Sensorinformationen zu empfangen oder Steuerungsinformationen an einen Aktuator zu senden, wobei das Kommunikations-/Steuerungsmodul (206) mindestens einen Prozessor (232) und ein nicht transitorisches Medium (230), das einen durch den mindestens einen Prozessor (232) ausführbaren Satz Anweisungen zum Steuern der Kommunikation mit dem einen oder den mehreren industriellen Elementen (206) enthält, beinhaltet;
Verifizieren der Authentizität der signierten Maßnahmenanforderung, wobei das Verifizieren der Authentizität der signierten Maßnahmenanforderung ferner Folgendes umfasst:
Empfangen eines Anforderungsdatagramms von dem Maßnahmenauthentifikator (204), wobei das Anforderungsdatagramm eine erste Nonce, ein erstes Vorrichtungsauthentifizierungsschlüsselzertifikat und ein erstes Identitätsattributzertifikat beinhaltet;
Validieren des Anforderungsdatagramms durch Verifizieren des ersten Vorrichtungsauthentifizierungsschlüsselzertifikats und des ersten Identitätsattributzertifikats;
Senden eines Antwortdatagramms an den Maßnahmenauthentifikator (204), wenn das Anforderungsdatagramm gültig ist, wobei das Antwortdatagramm eine zweite Nonce, eine mit der ersten und zweiten Nonce assoziierte erste Signatur, ein zweites Vorrichtungsauthentifizierungsschlüsselzertifikat und ein zweites Identitätsattributzertifikat beinhaltet;
Empfangen eines Authentifizierungsdatagramms von dem Maßnahmenauthentifikator (204), wobei das Authentifizierungsdatagramm eine mit der ersten und zweiten Nonce assoziierte zweite Signatur beinhaltet; und
Validieren des Authentifizierungsdatagramms durch Verifizieren der mit der ersten und zweiten Nonce assoziierten zweiten Signatur; und
Ausführen der angeforderten Maßnahme über das Kommunikations-/Steuerungsmodul (106) nur, wenn die Authentizität der signierten Maßnahmenanforderung verifiziert ist, wobei die Maßnahmenanforderung Befehle von dem Maßnahmenurheber (202) zum Überwachen und/oder Steuern von Sensor- und/oder Aktuatorgeräten beinhaltet; wobei das Verfahren bevorzugt ferner Folgendes umfasst:
Verschlüsseln der Maßnahmenanforderung mit dem Maßnahmenauthentifikator; und
Entschlüsseln der Maßnahmenanforderung mit dem Kommunikations-/Steuerungsmodul.

13. Das Verfahren nach Anspruch 12, wobei der Maßnahmenauthentifikator (204) mindestens eines von Folgendem umfasst: eine tragbare Verschlüsselungsvorrichtung, bevorzugt wie in Anspruch 3 definiert; eine gesicherte Arbeitsstation (226), bevorzugt wie in Anspruch 4 definiert; oder ein Vorrichtungslebenszyklus-Verwaltungssystem (222).

14. Das Verfahren nach Anspruch 12 oder Anspruch 13, wobei das Ausführen der angeforderten Maßnahme ferner Folgendes beinhaltet:
Steuern eines industriellen Elements (206) gemäß der Maßnahmenanforderung, wobei das industrielle Element (206) mindestens eines von Folgendem beinhaltet: ein Kommunikations-/Steuerungsmodul (106); ein Eingabe-/Ausgabemodul (104); ein Strommodul (112); eine Feldvorrichtung (130); einen Schalter; eine Arbeitsstation; oder eine physische Zwischenverbindungsvorrichtung.

15. Das sichere industrielle Steuerungssystem nach einem der Ansprüche 1 bis 8 oder das Verfahren nach einem der Ansprüche 12 bis 14, wobei das Kommunikations-/Steuerungsmodul (106) und das mindestens eine Eingabe-/Ausgabemodul (104) dafür konfiguriert sind, einen jeweiligen ersten und zweiten einmaligen Sicherheitsnachweis an jeweiligen Fertigungspunkten von einer Schlüsselverwaltungsentität (124) zu empfangen, wobei der erste und zweite einmalige Sicherheitsnachweis in jeweiligen Speichern des Kommunikations-/Steuerungsmoduls (106) und des mindestens einen Eingabe-/Ausgabemoduls (104) gespeichert sind, wobei mindestens einer des ersten und zweiten einmaligen Sicherheitsnachweises durch die Schlüsselverwaltungsentität (124) entfernt über kommunikatives Koppeln mit dem Kommunikations-/Steuerungsmodul (106) oder dem mindestens einen Eingabe-/Ausgabemodul (104) widerrufbar ist.

## Revendications

1. Système de commande industriel sécurisé (100), comprenant :
un donneur d'ordre d'action (202) et un module de communications/commande (106) configuré pour être au moins en partie amené à fonctionner selon des requêtes d'action du donneur d'ordre d'action (202) ;
un authentifiant d'action (204) situé à distance du donneur d'ordre d'action (202) et incluant un support de stockage avec une clé privée stockée sur celui-ci et un processeur configuré pour signer une requête d'action du donneur d'ordre d'action (202) avec la clé privée et envoyer la requête d'action signée au module de communications/commande (106) ; et
dans lequel le module de communications/commande (106) est en communication avec un ou plusieurs éléments industriels, les un ou plusieurs éléments industriels (206) incluant au moins un module d'entrée/sortie (104) capable de fonctionner pour recevoir des informations de capteur ou envoyer des informations de commande à un actionneur, le module de communications/commande (106) incluant au moins un processeur (232) et un support non transitoire (230) portant un jeu d'instructions exécutables par l'au moins un processeur (232), le jeu d'instructions incluant des instructions pour :
recevoir la requête d'action signée de l'authentifiant d'action (204) et vérifier l'authenticité de la requête d'action signée, dans lequel la vérification de l'authenticité de la requête d'action signée comprend en outre :
la réception d'un datagramme de requête provenant de l'authentifiant d'action (204), le datagramme de requête incluant un premier nonce, un premier certificat de clé d'authentification de dispositif, et un premier certificat d'attribut d'identité ;
la validation du datagramme de requête en vérifiant le premier certificat de clé d'authentification de dispositif et le premier certificat d'attribut d'identité ;
l'envoi d'un datagramme de réponse à l'authentifiant d'action (204) quand le datagramme de requête est valide, le datagramme de réponse incluant un deuxième nonce, une première signature associée aux premier et deuxième nonces, un deuxième certificat de clé d'authentification de dispositif, et un deuxième certificat d'attribut d'identité ;
la réception d'un datagramme d'authentification provenant de l'authentifiant d'action (204), le datagramme d'authentification incluant une deuxième signature associée aux premier et deuxième nonces ; et
la validation du datagramme d'authentification en vérifiant la deuxième signature associée aux premier et deuxième nonces ; et
réaliser l'action requise quand l'authenticité de la requête d'action signée est vérifiée, dans lequel la requête d'action inclut une ou plusieurs actions de commande d'opérateur du donneur d'ordre d'action (202) destinées à surveiller et/ou commander des instruments de capteur et/ou d'actionneur.

2. Système de commande industriel selon la revendication 1, dans lequel le donneur d'ordre d'action (202) comprend au moins une interface parmi : une interface d'opérateur (208) ; une interface d'ingénierie (210) ; une interface d'application locale (220) ; ou une interface d'application distante (216).

3. Système de commande industriel sécurisé selon la revendication 1 ou la revendication 2, dans lequel l'authentifiant d'action (204) comprend un dispositif de cryptage portable, de préférence comprenant une carte intelligente, qui inclut l'au moins un processeur, de préférence un microprocesseur crypté, en communication avec le support de stockage ayant la clé privée stockée sur celui-ci.

4. Système de commande industriel sécurisé selon l'une quelconque des revendications 1 à 3, dans lequel l'authentifiant d'action (204) comprend une station de travail sécurisée (226) ; de préférence dans lequel la station de travail sécurisée (226) est accessible par l'intermédiaire d'au moins : une clé physique ; un dispositif de cryptage portable ; ou un dispositif de cryptographie biométrique.

5. Système de commande industriel sécurisé selon l'une quelconque des revendications 1 à 4, dans lequel l'authentifiant d'action (204) est configuré en outre pour crypter la requête d'action avant l'envoi de la requête d'action signée au module de communication/commande (106).

6. Système de commande industriel sécurisé selon l'une quelconque des revendications 1 à 5, dans lequel le module de communications/commande (106) inclut :
un commutateur à clé virtuel (234) qui permet au processeur (232) d'exécuter la requête d'action quand l'authenticité de la requête d'action signée est vérifiée.

7. Système de commande industriel sécurisé selon l'une quelconque des revendications 1 à 6, dans lequel le module de communications/commande (106) et l'authentifiant d'action (204) sont configurés en outre pour réaliser une séquence d'authentification.

8. Système de commande industriel sécurisé selon l'une quelconque des revendications 1 à 7, dans lequel les un ou plusieurs éléments industriels (206) incluent en outre au moins un : d'un module de communications/commande (106) ; d'un module de puissance (112) ; d'un dispositif de terrain (130) ; d'un commutateur ; d'une station de travail ; ou d'un dispositif d'interconnexion physique.

9. Module de communications/commande (106) configuré pour être au moins partiellement amené à fonctionner selon des requêtes d'action d'un donneur d'ordre d'action (202), comprenant :
au moins un processeur (232) ; et
un support non transitoire (230) portant un jeu d'instructions exécutables par l'au moins un processeur (232), le jeu d'instructions incluant des instructions pour :
recevoir une requête d'action déclenchée au niveau d'un donneur d'ordre d'action (202) et signée par un authentifiant d'action (204) ;
vérifier l'authenticité de la requête d'action signée ;
dans lequel la vérification de l'authenticité de la requête d'action signée comprend en outre :
la réception d'un datagramme de requête à partir de l'authentifiant d'action (204), le datagramme de requête incluant un premier nonce, un premier certificat de clé d'authentification de dispositif, et un premier certificat d'attribut d'identité ;
la validation du datagramme de requête en vérifiant le premier certificat de clé d'authentification de dispositif et le premier certificat d'attribut d'identité ;
l'envoi d'un datagramme de réponse à l'authentifiant d'action (204) quand le datagramme de requête est valide, le datagramme de réponse incluant un deuxième nonce, une première signature associée aux premier et deuxième nonces, un deuxième certificat de clé d'authentification de dispositif, et un deuxième certificat d'attribut d'identité ;
la réception d'un datagramme d'authentification en provenance de l'authentifiant d'action (204), le datagramme d'authentification incluant une deuxième signature associée aux premier et deuxième nonces ; et
la validation du datagramme d'authentification en vérifiant la deuxième signature associée aux premier et deuxième nonces ; et
réaliser l'action requise quand l'authenticité de la requête d'action signée est vérifiée, dans lequel la requête d'action inclut une ou plusieurs actions de commande d'opérateur du donneur d'ordre d'action (202), dans lequel le donneur d'ordre d'action (202) inclut au moins une interface parmi : une interface d'opérateur (208) ; une interface d'ingénierie (210) ; une interface d'application locale (220) ; ou une interface d'application distante (216).

10. Module de communications/commande selon la revendication 9, comprenant en outre :
un commutateur à clé virtuel (234) qui permet au processeur (232) d'exécuter la requête d'action quand l'authenticité de la requête d'action signée est vérifiée.

11. Module de communications/commande selon la revendication 9 ou la revendication 10, dans lequel le jeu d'instructions inclut en outre des instructions pour décrypter la requête d'action signée ; et/ou dans lequel les instructions pour réaliser l'action requise quand l'authenticité de la requête d'action signée est vérifiée incluent :
des instructions pour commander un élément industriel couplé en communication (206) incluant au moins un : d'un module de communications/commande (106) ; d'un module d'entrée/sortie (104) ; d'un module de puissance (112) ; d'un dispositif de terrain (130) ; d'un commutateur ; d'une station de travail ; ou d'un dispositif d'interconnexion physique.

12. Procédé d'exécution d'une action requise dans un système de commande industriel sécurisé (100), comprenant :
la signature d'une requête d'action d'un donneur d'ordre d'action (202) avec un authentifiant d'action (204), l'authentifiant d'action (204) situé à distance du donneur d'ordre d'action (202) et incluant un support de stockage avec une clé privée stockée sur celui-ci et un processeur configuré pour signer une requête d'action du donneur d'ordre d'action avec la clé privée ;
la réception de la requête d'action signée au niveau d'un module de communications/commande (106) configuré pour être au moins partiellement amené à fonctionner selon des requêtes d'action du donneur d'ordre d'action (202), le module de communications/commande en communication avec un ou plusieurs éléments industriels (206), les un ou plusieurs éléments industriels (206) incluant au moins un module d'entrée/sortie (104) capable de fonctionner pour recevoir des informations de capteur ou envoyer des informations de commande à un actionneur, le module de communications/commande (206) incluant au moins un processeur (232) et un support non transitoire (230) portant un jeu d'instructions exécutables par l'au moins un processeur (232) destiné à commander des communications avec les un ou plusieurs éléments industriels (206) ;
la vérification de l'authenticité de la requête d'action signée, dans lequel la vérification de l'authenticité de la requête d'action signée comprend en outre :
la réception d'un datagramme de requête en provenance de l'authentifiant d'action (204), le datagramme de requête incluant un premier nonce, un premier certificat de clé d'authentification de dispositif, et un premier certificat d'attribut d'identité ;
la validation du datagramme de requête en vérifiant le premier certificat de clé d'authentification de dispositif et le premier certificat d'attribut d'identité ;
l'envoi d'un datagramme de réponse à l'authentifiant d'action (204) quand le datagramme de requête est valide, le datagramme de réponse incluant un deuxième nonce, une première signature associée aux premier et deuxième nonces, un deuxième certificat de clé d'authentification de dispositif, et un deuxième certificat d'attribut d'identité ;
la réception d'un datagramme d'authentification en provenance de l'authentifiant d'action (204), le datagramme d'authentification incluant une deuxième signature associée aux premier et deuxième nonces ; et
la validation du datagramme d'authentification en vérifiant la deuxième signature associée aux premier et deuxième nonces ; et
l'exécution de l'action requise par l'intermédiaire du module de communications/commande (106) uniquement quand l'authenticité de la requête d'action signée est vérifiée, dans lequel la requête d'action inclut des commandes provenant du donneur d'ordre d'action (202) destinées à surveiller et/ou commander les instruments de capteur et/ou d'actionneur ; le procédé comprenant en outre de préférence :
le cryptage de la requête d'action avec l'authentifiant d'action ; et
le décryptage de la requête d'action avec le module de communications/commande.

13. Procédé selon la revendication 12, dans lequel l'authentifiant d'action (204) comprend au moins un : d'un dispositif de cryptage portable de préférence selon la revendication 3 ; d'une station de travail sécurisée (226), de préférence selon la revendication 4 ; ou d'un système de gestion de cycle de vie de dispositif (222).

14. Procédé selon la revendication 12 ou la revendication 13, dans lequel l'exécution de l'action requise inclut en outre :
la commande d'un élément industriel (206) selon la requête d'action, l'élément industriel (206) incluant au moins un : d'un module de communications/commande (106) ; d'un module d'entrée/sortie (104) ; d'un module de puissance (112) ; d'un dispositif de terrain (130) ; d'un commutateur ; d'une station de travail ; ou d'un dispositif d'interconnexion physique.

15. Système de commande industriel sécurisé selon l'une quelconque des revendications 1 à 8 ou procédé selon l'une quelconque des revendications 12 à 14, dans lequel le module de communications/commande (106) et l'au moins un module d'entrée/sortie (104) sont configurés pour recevoir des premier et deuxième identifiants de sécurité uniques respectifs au niveau de points de fabrication respectifs en provenance d'une entité de gestion de clés (124), les premier et deuxième identifiants de sécurité uniques étant stockés dans des mémoires respectives du module de communications/commande (106) et l'au moins un module d'entrée/sortie (104), dans lequel au moins l'un des premier et deuxième identifiants de sécurité uniques est révocable par l'entité de gestion de clé (124) à distance par l'intermédiaire d'un couplage de communication avec le module de communications/commande (106) ou l'au moins un module d'entrée/sortie (104).
